# EUROPEAN PATENT APPLICATION

(11) **EP 4 394 659 A1**
(43) Date of publication of application: **03.07.2024**
(21) Application number: 23307404.6
(22) Date of filing: 28.12.2023
(51) Int. Cl.: G06N 3/0464, G06N 3/091

(54) **FIT-FOR-BASIN CONTINUOUS MACHINE LEARNING FOR WELL INTEGRITY**

(30) Priority: 29.12.2022 US 202263477577 P
(71) Applicant: Services Pétroliers Schlumberger, 75007 Paris (FR); GeoQuest Systems B.V., 2514 JG The Hague (NL)
(72) Inventor: BENSLIMANE, Salma, CA 94025 Menlo Park (US); ZHANG, Xiaolin, 92140 Clamart (FR)
(74) Representative: Germain Maureau

(57) **Abstract**

Systems and methods of the present disclosure include a fit-for-basin strategy to automate continuous learning for machine learning models to be integrated into webbased and cloud-based software. For example, a method includes training a machine learning (ML) model to create a trained ML model that is configured to output well prediction results based on datasets specific to respective wells; deploying the trained ML model to a cloud-based application; providing a data label module to a computing system associated with an end user; receiving, via the cloud-based application, a training dataset specific to a well, wherein the training dataset comprises data labeling generated by the end user via the data label module; re-training, via the cloud-based application, the trained ML model using the training dataset to generate a plurality of re-trained ML model candidates; automatically evaluating, via the cloud-based application, the plurality of re-trained ML model candidates to generate a recommended re-trained ML model; and outputting, from the cloud-based application, well prediction results and the recommended re-trained ML model to the computing system associated with the end user.

## Description

### CROSS-REFERENCE TO RELATED APPLICATION

This application claims priority to and the benefit of U.S. Provisional Patent Application Serial No. 63/477,577, entitled "FIT-FOR-BASIN CONTINUOUS MACHINE LEARNING FOR WELL INTEGRITY," filed December 29, 2022, which is hereby incorporated by reference in its entirety for all purposes.

### FIELD OF THE INVENTION

The present disclosure relates to systems and methods for enabling a fit-for-basin strategy to automate continuous learning for machine learning models to be integrated into web-based and cloud-based software.

### BACKGROUND INFORMATION

This section is intended to introduce the reader to various aspects of art that may be related to various aspects of the present disclosure, which are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

Recent trends toward digital transformation of data and migration from local software to cloud-based solution offerings are catalyzers for artificial intelligence and machine learning model deployment and commercialization. For example, integration of machine learning models using web-based and cloud-based software is become more prevalent for cement and casing evaluation, among other types of analysis, in relation to well integrity.

### SUMMARY

A summary of certain embodiments described herein is set forth below. It should be understood that these aspects are presented merely to provide the reader with a brief summary of these certain embodiments and that these aspects are not intended to limit the scope of this disclosure.

Certain embodiments of the present disclosure include a method that includes training a machine learning (ML) model to create a trained ML model. The trained ML model is configured to output well prediction results based on datasets specific to respective wells. The method also includes deploying the trained ML model to a cloud-based application. The method further includes providing a data label module to a computing system associated with an end user. In addition, the method includes receiving, via the cloud-based application, a training dataset specific to a well. The training dataset comprises data labeling generated by the end user via the data label module. The method also includes re-training, via the cloud-based application, the trained ML model using the training dataset to generate a plurality of re-trained ML model candidates. The method further includes automatically evaluating, via the cloud-based application, the plurality of re-trained ML model candidates to generate a recommended re-trained ML model. In addition, the method includes outputting, from the cloud-based application, well prediction results and the recommended re-trained ML model to the computing system associated with the end user.

### BRIEF DESCRIPTION OF THE DRAWINGS

Various aspects of this disclosure may be better understood upon reading the following detailed description and upon reference to the drawings, in which:
FIG. 1 illustrates an example wellsite system, in accordance with embodiments of the present disclosure;
FIG. 2 illustrates a well control system configured to control the wellsite system of FIG. 1, in accordance with embodiments of the present disclosure;
FIG. 3 illustrates a flow diagram of a method for performing fit-for-basin continuous machine learning for well integrity techniques, in accordance with embodiments of the present disclosure; and
FIG. 4 illustrates a detailed view of a web-based and cloud-based infrastructure that enables fit-for-basin continuous machine learning for well integrity techniques, in accordance with embodiments of the present disclosure.

### DETAILED DESCRIPTION

In the following, reference is made to embodiments of the disclosure. It should be understood, however, that the disclosure is not limited to specific described embodiments. Instead, any combination of the following features and elements, whether related to different embodiments or not, is contemplated to implement and practice the disclosure. Furthermore, although embodiments of the disclosure may achieve advantages over other possible solutions and/or over the prior art, whether or not a particular advantage is achieved by a given embodiment is not limiting of the disclosure. Thus, the following aspects, features, embodiments and advantages are merely illustrative and are not considered elements or limitations of the claims except where explicitly recited in a claim. Likewise, reference to "the disclosure" shall not be construed as a generalization of inventive subject matter disclosed herein and should not be considered to be an element or limitation of the claims except where explicitly recited in a claim.

Although the terms first, second, third, etc., may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first", "second" and other numerical terms, when used herein, do not imply a sequence or order unless clearly indicated by the context. Thus, a first element, component, region, layer or section discussed herein could be termed a second element, component, region, layer or section without departing from the teachings of the example embodiments.

When introducing elements of various embodiments of the present disclosure, the articles "a," "an," and "the" are intended to mean that there are one or more of the elements. The terms "comprising," "including," and "having" are intended to be inclusive and mean that there may be additional elements other than the listed elements. Additionally, it should be understood that references to "one embodiment" or "an embodiment" of the present disclosure are not intended to be interpreted as excluding the existence of additional embodiments that also incorporate the recited features.

When an element or layer is referred to as being "on," "engaged to," "connected to," or "coupled to" another element or layer, it may be directly on, engaged, connected, coupled to the other element or layer, or interleaving elements or layers may be present. In contrast, when an element is referred to as being "directly on," "directly engaged to," "directly connected to," or "directly coupled to" another element or layer, there may be no interleaving elements or layers present. Other words used to describe the relationship between elements should be interpreted in a like fashion. As used herein, the term "and/or" includes any and all combinations of one or more of the associated listed terms.

Some embodiments will now be described with reference to the figures. Like elements in the various figures will be referenced with like numbers for consistency. In the following description, numerous details are set forth to provide an understanding of various embodiments and/or features. It will be understood, however, by those skilled in the art, that some embodiments may be practiced without many of these details, and that numerous variations or modifications from the described embodiments are possible. As used herein, the terms "above" and "below", "up" and "down", "upper" and "lower", "upwardly" and "downwardly", and other like terms indicating relative positions above or below a given point are used in this description to more clearly describe certain embodiments.

In addition, as used herein, the terms "real time", "real-time", or "substantially real time" may be used interchangeably and are intended to describe operations (e.g., computing operations) that are performed without any human-perceivable interruption between operations. For example, as used herein, data relating to the systems described herein may be collected, transmitted, and/or used in control computations in "substantially real time" such that data readings, data transfers, and/or data processing steps occur once every second, once every 0.1 second, once every 0.01 second, or even more frequent, during operations of the systems (e.g., while the systems are operating). In addition, as used herein, the terms "continuous", "continuously", or "continually" are intended to describe operations that are performed without any significant interruption. For example, as used herein, control commands may be transmitted to certain equipment every five minutes, every minute, every 30 seconds, every 15 seconds, every 10 seconds, every 5 seconds, or even more often, such that operating parameters of the equipment may be adjusted without any significant interruption to the closed-loop control of the equipment. In addition, as used herein, the terms "automatic", "automated", "autonomous", and so forth, are intended to describe operations that are performed are caused to be performed, for example, by a computing system (i.e., solely by the computing system, without human intervention). Indeed, it will be appreciated that the data processing system described herein may be configured to perform any and all of the data processing functions described herein automatically.

In addition, as used herein, the term "substantially similar" may be used to describe values that are different by only a relatively small degree relative to each other. For example, two values that are substantially similar may be values that are within 10% of each other, within 5% of each other, within 3% of each other, within 2% of each other, within 1% of each other, or even within a smaller threshold range, such as within 0.5% of each other or within 0.1 % of each other.

Similarly, as used herein, the term "substantially parallel" may be used to define downhole tools, formation layers, and so forth, that have longitudinal axes that are parallel with each other, only deviating from true parallel by a few degrees of each other. For example, a downhole tool that is substantially parallel with a formation layer may be a downhole tool that traverses the formation layer parallel to a boundary of the formation layer, only deviating from true parallel relative to the boundary of the formation layer by less than 5 degrees, less than 3 degrees, less than 2 degrees, less than 1 degree, or even less.

As described above, integration of machine learning models using web-based and cloud-based software is become more prevalent for cement and casing evaluation, among other types of analysis, in relation to well integrity. After initial training of a machine learning (ML) or deep learning (DL) model on limited datasets, the prospect of using the model for different wells and/or basins and achieving robust performance on highly variable datasets is relatively challenging, even unrealistic in certain scenarios. Furthermore, restrictions relating to data access, confidentiality, and residency limits the ability to host certain types of data and to re-train models centrally. As a result, during field testing and deployment phases, specific new data relating to the particular new well and/or basin is generally needed to fine tune, customize, and continuously improve ML and DL models.

Embodiments of the present disclosure generally relate to enabling a fit-for-basin strategy to automate continuous learning for machine learning models to be integrated into web-based and cloud-based software. The embodiments described herein include raw data labeling, model re-training, result evaluation, and quality checking, which enables the generation of customized machine learning solutions for their specific use cases. In particular, the embodiments described herein generally include:
1) Training an initial static machine learning model with limited open-source and/or released, publically available datasets relating to parameters of oil and gas well operations;
2) For new data samples on which the trained machine learning model does not produce accurate predictions, a labeling tool enables users to manually annotate the data;
3) Then, once new data samples have been labeled, re-training of the machine learning model includes considering a ratio between previously existing and newly labeled datasets, model hyperparameters and loss functions, and model convergence, while also avoiding forgetting certain data relationships; and
4) Then, a comprehensive model evaluation and results quality control (QC) method may be implemented. In particular, in addition to the commonly used accuracy indicators, the QC method includes factors from other aspects such as result confidence, robustness to noise, and matching between mathematical or physical forward modeling and observation data to integrate data relating to a particular well and/or basin into the re-trained machine learning model to provide fit-for-basin or fit-for-reservoir machine learning solutions.

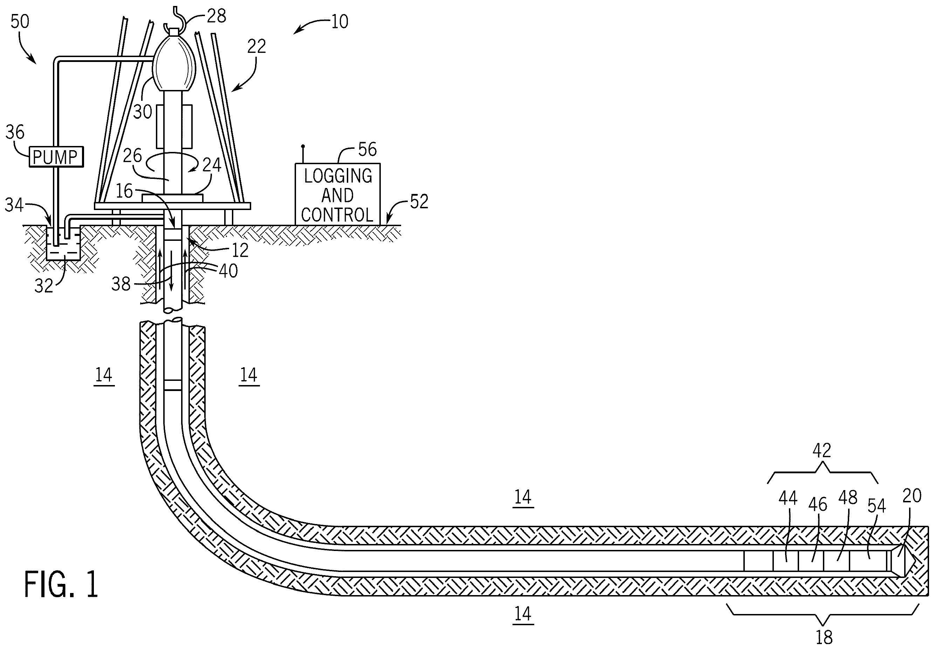

FIG. 1 illustrates a wellsite system 10 within which the embodiments described herein may be employed. The wellsite system 10 may be an onshore wellsite or offshore wellsite. In the illustrated embodiment, the wellsite system 10 is located at an onshore wellsite. In the illustrated embodiment, a borehole 12 is formed in a subterranean formation 14 by rotary drilling in a manner that is well known. The embodiments described herein may be employed in association with other wellsite systems to perform directional drilling.

The wellsite system 10 includes a drill string 16 that may be suspended within borehole 12. The drill string 16 includes a bottom-hole assembly (BHA) 18 with a drill bit 20 at its lower end. In certain embodiments, the wellsite system 10 may include a platform and derrick assembly 22 positioned over the borehole 12. In certain embodiments, the platform and derrick assembly 22 may include a rotary table 24, a kelly 26, a hook 28, and a rotary swivel 30. The drill string 16 may be rotated by the rotary table 24, energized by means not shown, which engages the kelly 26 at an upper end of drill string 16. In certain embodiments, the drill string 16 may be suspended from the hook 28, attached to a traveling block (also not shown), through the kelly 26 and a rotary swivel 30, which may permit rotation of the drill string 16 relative to the hook 28. In certain embodiments, a top drive system may also be used.

In the illustrated embodiment, drilling fluid 32 is stored in a pit 34 formed at the wellsite. In certain embodiments, a pump 36 may deliver the drilling fluid 32 to an interior of the drill string 16 via a port in the swivel 30, causing the drilling fluid 32 to flow downwardly through the drill string 16 as indicated by directional arrow 38. The drilling fluid 32 may then exit the drill string 16 via ports in the drill bit 20, and circulate upwardly through an annulus region between the outside of the drill string 16 and a wall of the borehole 12, as indicated by directional arrows 40. In this manner, the drilling fluid 32 may lubricate the drill bit 20 and carry formation cuttings up to the surface as the drilling fluid 32 is returned to the pit 34 for recirculation.

As illustrated in FIG. 1, in certain embodiments, the BHA 18 may include the drill bit 20 as well as a variety of downhole equipment 42, including a logging-while-drilling (LWD) module 44, a measuring-while-drilling (MWD) module 46, a roto-steerable system and motor, and so forth. In certain embodiments, more than one LWD module 44 and/or MWD module 46 may be employed (e.g., as represented at position 48). References throughout to a module at position 44 may also mean a module at position 48 as well.

For example, in certain embodiments, an LWD module 44 may be housed in a special type of drill collar, as is known in the art, and may include one or more of a plurality of known types of logging tools (e.g., an electromagnetic logging tool, a nuclear magnetic resonance (NMR) tool, and/or a sonic logging tool). In certain embodiments, the LWD module 44 may include capabilities for measuring, processing, and storing information, as well as for communicating with surface equipment 50 (e.g., including all of the equipment above the surface 52 of the wellsite illustrated in and described with reference to FIG. 1). In particular, as described in greater detail herein, the LWD module 44 may include a resistivity logging tool configured to obtain deep directional resistivity measurements that may be used by inversion algorithms to infer geometry and properties of the earth formation surrounding the well logging instrument.

In certain embodiments, an MWD module 46 may also be housed in a special type of drill collar, as is known in the art, and may include one or more devices for measuring characteristics of the well environment, such as characteristics of the drill string 16 and the drill bit 20, for example. In certain embodiments, the MWD module 46 may further include an apparatus (not shown) for generating electrical power to the downhole system, which may include a mud turbine generator powered by the flow of the drilling fluid 32. However, other power and/or battery systems may be employed. In certain embodiments, the MWD module 46 may include one or more of a variety of measuring devices known in the art (e.g., a weight-on-bit measuring device, a torque measuring device, a vibration measuring device, a shock measuring device, a stick slip measuring device, a direction measuring device, an inclination measuring device, and so forth).

In certain embodiments, MWD tools in the MWD module 46, and LWD tools in the LWD module 44 may include one or more characteristics common to wireline tools (e.g., transmitting and receiving antennas, sensors, etc.) with the MWD and LWD tools being designed and constructed to endure and operate in the harsh environment of drilling.

Various systems and methods may be used to transmit information (data and/or commands) from the downhole equipment 42 to the surface 52 of the wellsite. In certain embodiments, information may be received by one or more downhole sensors 54, which may be located in a variety of locations and may be chosen from any sensing and/or detecting technologies known in the art, including those capable of measuring various types of radiation, electric or magnetic fields, including electrodes (such as stakes), magnetometers, coils, and so forth.

In certain embodiments, information from the downhole equipment 42, including LWD data and/or MWD data, may be utilized for a variety of purposes including steering the drill bit 20 and any tools associated therewith, characterizing the formation 14 surrounding borehole 12, characterizing fluids within borehole 12, and so forth. For example, in certain embodiments, information from the downhole equipment 42 may be used to create one or more sub-images of various portions of borehole 12, as described in greater detail herein.

As described in greater detail herein, in certain embodiments, the logging and control system 56 may receive and process a variety of information from a variety of sources, including the downhole equipment 42 and the surface equipment 50. In addition, in certain embodiments, the logging and control system 56 may also control a variety of equipment, such as the downhole equipment 42 and the drill bit 20, as well as the surface equipment 50.

In certain embodiments, the logging and control system 56 may also be used with a wide variety of oilfield applications, including logging while drilling, artificial lift, measuring while drilling, wireline, and so forth, and may include one or more processor-based computing systems, such as a microprocessor, programmable logic devices (PLDs), field-gate programmable arrays (FPGAs), application-specific integrated circuits (ASICs), system-on-a-chip processors (SoCs), or any other suitable integrated circuit capable of executing encoded instructions stored, for example, on tangible computer-readable media (e.g., read-only memory, random access memory, a hard drive, optical disk, flash memory, etc.). Such instructions may correspond to, for example, workflows for carrying out a drilling operation, algorithms and routines for processing data received at the surface 52 from the downhole equipment 42, the surface equipment 50, and so forth.

The logging and control system 56 may be located at the surface 52, below the surface 52, proximate to the borehole 12, remote from the borehole 12, or any combination thereof. For example, in certain embodiments, information received by the downhole equipment 42 and/or the downhole sensors 54 may be processed by the logging and control system 56 at one or more locations, including any configuration known in the art, such as in one or more handheld computing devices proximate or remote from the wellsite system 10, at a computer located at a remote command center, a computer located at the wellsite system 10, and so forth.

In certain embodiments, the logging and control system 56 may be used to create images of the borehole 12 and/or the formation 14 from information received from the downhole equipment 42 and/or from various other tools, including wireline tools. In addition, in certain embodiments, the logging and control system 56 may also perform various aspects of the inversion methods described herein to perform an inversion to obtain one or more desired formation parameters. In addition, in certain embodiments, the logging and control system 56 may also use information obtained from the inversion to perform a variety of operations including, for example, steering the drill bit 20 through the formation 14, with or without the help of a user (e.g., either instructed or autonomous).

FIG. 1 shows an example of the wellsite system 10. However, the embodiments described herein are not necessarily limited to drilling systems. For example, various embodiments described herein may be implemented with wireline systems.

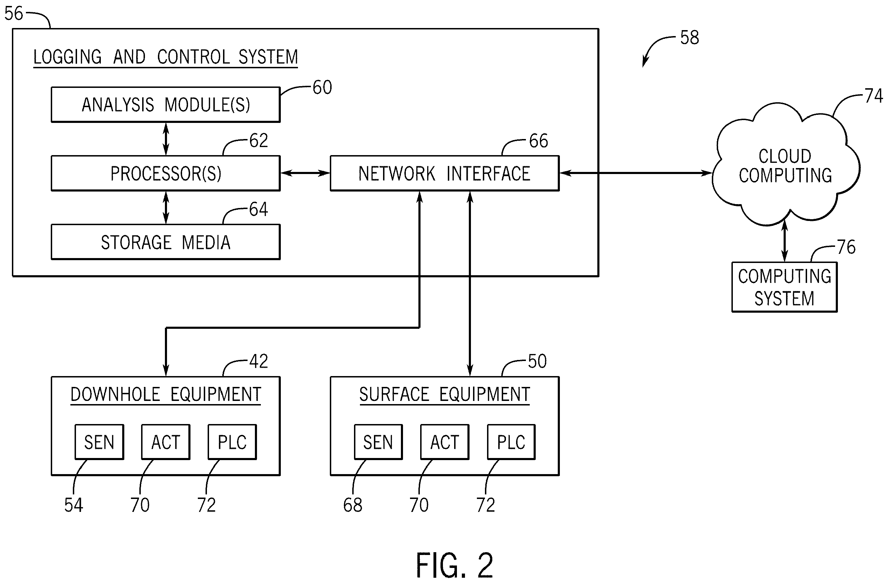

FIG. 2 illustrates a well control system 58 (e.g., that includes the logging and control system 56) configured to control the wellsite system 10 of FIG. 1. In certain embodiments, the logging and control system 56 may include one or more analysis modules 60 (e.g., a program of computer-executable instructions and associated data) that may be configured to perform various functions of the embodiments described herein. In certain embodiments, to perform these various functions, the one or more analysis modules 60 may execute on one or more processors 62 of the logging and control system 56, which may be connected to one or more storage media 64 of the logging and control system 56. Indeed, in certain embodiments, the one or more analysis modules 60 may be stored in the one or more storage media 64.

In certain embodiments, the computer-executable instructions of the one or more analysis modules 60, when executed by the one or more processors 62, may cause the one or more processors 62 to utilize one or more machine learning models, as described in greater detail herein. Such machine learning models may be used by the logging and control system 56 to predict values of operational parameters that may or may not be measured (e.g., using gauges, sensors) during well operations.

In certain embodiments, the one or more processors 62 may include a microprocessor, a microcontroller, a processor module or subsystem, a programmable integrated circuit, a programmable gate array, a digital signal processor (DSP), or another control or computing device. In certain embodiments, the one or more processors 62 may include machine learning and/or artificial intelligence (Al) based processors. In certain embodiments, the one or more storage media 64 may be implemented as one or more non-transitory computer-readable or machine-readable storage media. In certain embodiments, the one or more storage media 64 may include one or more different forms of memory including semiconductor memory devices such as dynamic or static random access memories (DRAMs or SRAMs), erasable and programmable read-only memories (EPROMs), electrically erasable and programmable read-only memories (EEPROMs) and flash memories; magnetic disks such as fixed, floppy and removable disks; other magnetic media including tape; optical media such as compact disks (CDs) or digital video disks (DVDs); or other types of storage devices. Note that the computer-executable instructions and associated data of the analysis module(s) 60 may be provided on one computer-readable or machine-readable storage medium of the storage media 64, or alternatively, may be provided on multiple computer-readable or machine-readable storage media distributed in a large system having possibly plural nodes. Such computer-readable or machine-readable storage medium or media are considered to be part of an article (or article of manufacture), which may refer to any manufactured single component or multiple components. In certain embodiments, the one or more storage media 64 may be located either in the machine running the machine-readable instructions, or may be located at a remote site from which machine-readable instructions may be downloaded over a network for execution.

In certain embodiments, the processor(s) 62 may be connected to a network interface 66 of the logging and control system 56 to allow the logging and control system 56 to communicate with the multiple downhole sensors 54 and surface sensors 68, as well as communicate with actuators 70 and/or PLCs 72 of the surface equipment 50 and of the downhole equipment 42 of the BHA 18, as described in greater detail herein. In certain embodiments, the network interface 66 may also facilitate the logging and control system 56 to communicate data to cloud computing resources 74, which may in turn communicate with external computing systems 76 to access and/or to remotely interact with the logging and control system 56.

It should be appreciated that the well control system 58 illustrated in FIG. 2 is only one example of a well control system, and that the well control system 58 may have more or fewer components than shown, may combine additional components not depicted in the embodiment of FIG. 2, and/or the well control system 58 may have a different configuration or arrangement of the components depicted in FIG. 2. In addition, the various components illustrated in FIG. 2 may be implemented in hardware, software, or a combination of both hardware and software, including one or more signal processing and/or application specific integrated circuits. Furthermore, the operations of the well control system 58 as described herein may be implemented by running one or more functional modules in an information processing apparatus such as application specific chips, such as application-specific integrated circuits (ASICs), field-programmable gate arrays (FPGAs), programmable logic devices (PLDs), systems on a chip (SOCs), or other appropriate devices. These modules, combinations of these modules, and/or their combination with hardware are all included within the scope of the embodiments described herein.

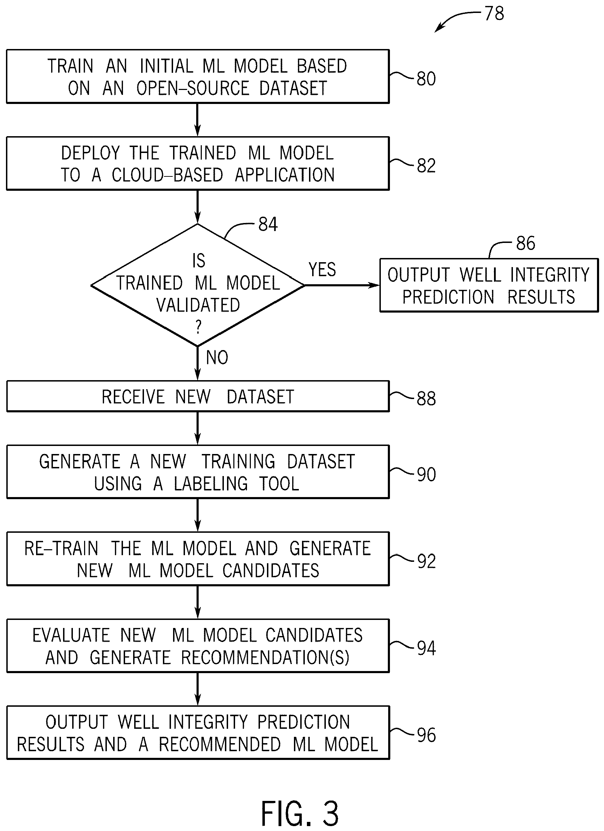

FIG. 3 illustrates a flow diagram of a method 78 for performing the fit-for-basin continuous machine learning for well integrity techniques described in greater detail herein. As illustrated, in certain embodiments, the method 78 may begin by training an initial machine learning (ML) model (or deep learning (DL) model) based on an open-source (or otherwise publically available) dataset (step 80). The trained ML model is configured to output well integrity prediction results based on datasets specific to respective wells. Then, the trained ML model may be deployed to a cloud-based application to, for example, expose the trained ML model to end users (step 82). Then, a determination may be made if the trained ML model is validated or not (e.g., if the prediction results from the trained ML model are within a predetermined accuracy threshold) (decision block 84). If the trained ML model is validated, then the prediction results may be outputted, and the trained ML model may be implemented (step 86).

Alternatively, however, if the trained ML model is not validated, then a new dataset specific to a particular well and/or basin, which may be used to re-train the ML model, may be received (step 88). Specifically, a new training dataset may be generated using a data labeling tool (e.g., that includes a data label module provided to a computing system as a software update) (step 90). For example, as described in greater detail herein, an end user may add labels to the newly received dataset using the data labeling tool. Then, the labeled dataset may be used as a training dataset to re-train the ML model and generate new ML model candidates (step 92). Then, the new ML model candidates may be evaluated to generate a recommended new ML model (step 94). Then, the prediction results and the new ML model may be outputted, and the new ML model may be implemented (step 96).

In certain embodiments, prior to re-training of the ML model, the data label module may encrypt the new training dataset, and a new data labeling module may decrypt the new training dataset during re-training of the ML model, without exposing the new training dataset external to the new data labeling module or the ML model. In other words, the new data labeling module may include logic to decrypt the new training dataset, for example, using an encryption key specific to an end user that generated the new training dataset, and new data labeling module may provide the decrypted new training dataset directly to ML model, without exposing the decrypted new training dataset external to the new data labeling module or the ML model. As such, the privacy and data confidentiality of the new training dataset may be preserved for the end user insofar as no other humans will ever have access to the new training dataset.

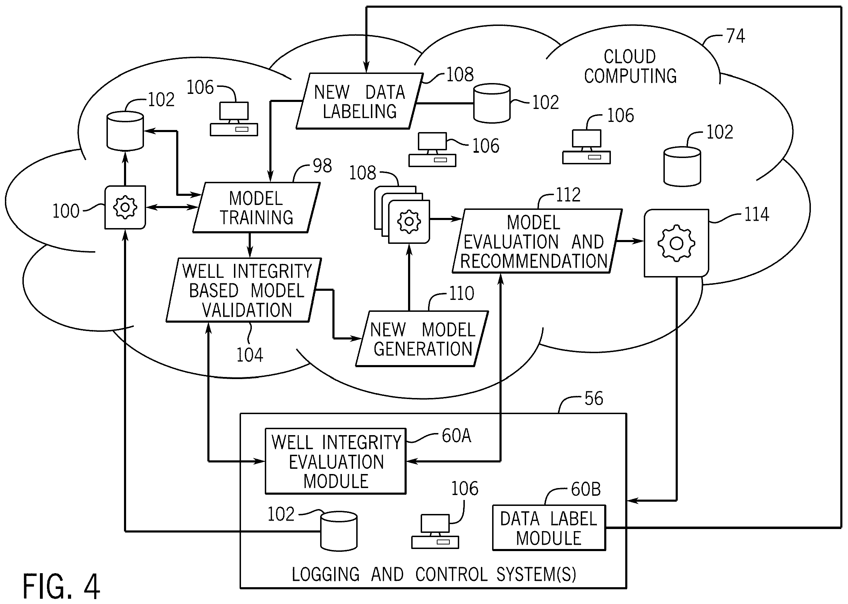

FIG. 4 illustrates a more detailed view of the web-based and cloud-based infrastructure that enables the fit-for-basin continuous machine learning for well integrity techniques described in greater detail herein. As illustrated, in certain embodiments, one or more logging and control systems 56 may each include a well integrity evaluation module 60A, which may enable much of the functionality described herein. For example, in certain embodiments, a well integrity evaluation module 60A may be configured to receive an open-source (or otherwise publically available) dataset, and to train an initial ML model based on the received open-source (or otherwise publically available) dataset at least partially using a model training module 98 of the cloud-based application 74. Then, in certain embodiments, the well integrity evaluation module 60A may deploy the trained ML model 100 to a cloud-based application 74 where it may be exposed to end users, for example, via other logging and control systems 56. In addition, in certain embodiments, the trained ML model 100 may be stored in a decentralized database 102 of the cloud-based application 74, as well as in a local database 102 located proximate to respective logging and control systems 56. Then, in certain embodiments, a well integrity based model validation module 104 of the cloud-based application 74 may determine whether the trained ML model 100 is validated or not (e.g., if the prediction results from the trained ML model 100 are within a predetermined accuracy threshold). If the trained ML model 100 is validated by the well integrity based model validation module 104, then the prediction results may be outputted to one or more logging and control systems 56 and the trained ML model 100 may be implemented (e.g., to analyze a particular well). In addition, in certain embodiments, the cloud-based application 74 may be configured to also output a command signal to be sent to a logging and control system 56 to automatically launch the well integrity evaluation module 60A on the logging and control system 56 to present data relating to the prediction results.

Alternatively, in certain embodiments, if the trained ML model 100 is not validated by the well integrity based model validation module 104, then a new dataset, which may re-train the ML model 100, may be received, for example, from an end user using a user terminal 106 of a respective logging and control system 56. In particular, in certain embodiments, a new training dataset may be generated using a data label module 60B of a logging and control system 56, which may enable the end user to add labels to the new dataset (e.g., annotations as to various significant events noted in the new dataset), which may be interpreted by a new data labeling module 108 of the cloud-based application 74. Then, in certain embodiments, the labeled dataset may be used as a training dataset to re-train the ML model 100 and generate new ML model candidates 108 using a new model generation module 110 of the cloud-based application 74. Then, in certain embodiments, the new ML model candidates 108 may be evaluated by a model evaluation and recommendation module 112 of the cloud-based application 74 to generate a recommended new ML model 114. Then, the prediction results and the new ML model 114 may be outputted to one or more logging and control systems 56, and the new ML model 114 may be implemented (e.g., to analyze a particular well). In addition, in certain embodiments, the cloud-based application 74 may be configured to also output a command signal to be sent to a logging and control system 56 to automatically launch the well integrity evaluation module 60A on the logging and control system 56 to present data relating to the prediction results and the new ML model 114.

As described above, in certain embodiments, prior to re-training of the ML model 100, the data label module 60B may encrypt the new training dataset, and the new data labeling module 108 may decrypt the new training dataset during re-training of the ML model 100, without exposing the new training dataset external to the new data labeling module 108 or the ML model 100. In other words, the new data labeling module 108 may include logic to decrypt the new training dataset, for example, using an encryption key specific to an end user (or a logging and control system 56 used by the end user) that generated the new training dataset, and new data labeling module 108 may provide the decrypted new training dataset directly to ML model 100, without exposing the decrypted new training dataset external to the new data labeling module 108 or the ML model 100. As such, the privacy and data confidentiality of the new training dataset may be preserved for the end user insofar as no other humans will ever have access to the new training dataset.

Conventional machine learning models deployed to production are usually static, which means that the models are fixed after being trained on a specific dataset. Models used for prediction on new datasets may have heterogeneous results depending on the data quality and similarity to the original dataset. A gap exists between the training and testing datasets, which may be bridged by a continual learning workflow, as described in greater detail herein. Prediction accuracy is the commonly used index to evaluate and select machine models. However, it does not consider the robustness (e.g., anti-noise) and matching with physical observations, which are very important for oil and gas processing and interpretation. This limitation may be improved by the integrated evaluation techniques described in greater detail herein. For model re-training, considering that: (1) end users may often have limited knowledge of machine learning, and (2) there is relatively low efficiency for manually tuning model training parameters, it may be relatively difficult for end users to optimize machine learning in an effective and efficient manner.

The embodiments described herein provide for continual machine learning, which is a relatively complex task involving machine learning knowledge, training capabilities, data storage and management, accessible user interfaces, and real time processing. The embodiments described herein allow robust continual machine learning for end users in a secure and data confidential manner. In addition to the commonly used accuracy indicators, the comprehensive evaluation methods described herein include factors from other aspects such as results confidence, robustness to noise, and matching between prediction results and related observation data. In addition, the embodiments described herein automatically evaluate models with these indices via a spider diagram analysis to choose the best model candidate to recommend to end users.

The embodiments described herein may be used in a variety of applications when dealing with online machine learning or deep learning models predictions. For example, gas detection in ultrasonic data with a deep learning convolutional neural network may be deployed via the cloud-based application 74 described herein. End users may use a provided static model to perform predictions on their data and get the segmentation of gas detection data. This new data may then be used to re-train the model and boost its performance. The resolved task is segmentation, so an additional labeling step may be required before re-training the model in this scenario. The data label module 60B described herein may be provided to end users as a software update to enable the end users to label their own datasets where the prediction results of the static model are not accurate enough. Then, once a new dataset is labeled and given the complexity of re-training possibilities, the validation workflow (e.g., including the well integrity based model validation module 104 described herein) provides the end users the flexibility of choice of the re-trained model based on specific criteria of the end users' preference.

In addition, the new datasets used by the end users is usually confidential with residency restrictions (i.e., where the data is stored). The techniques described herein allows re-training of models to be done online and on-the-fly such that the cloud-based application 74 does not store the datasets but, rather, the datasets may remain local to the logging and control systems 56 described herein. During the model re-training, the end users do not need to modify the logic used by the models. Rather, after uploading the new labeled dataset, indicating matching physical observation (which may be optional) and starting the model re-training process, multiple models may be generated and evaluated based on various different aspects (e.g. accuracy, robustness, matching with physical observations, and so forth) to automatically determine the best model and recommend it to the ends users, along with the evaluation evidence in certain embodiments.

In addition, the embodiments described herein enable continual machine learning for classification tasks, segmentation tasks, detection tasks, and regression tasks using the data labeling techniques described herein. Furthermore, the embodiments described herein provide a multi-aspect evaluation method for models re-trained with new labeled datasets. The different aspects may either be pre-defined or selected by the end users, enabling greater flexibility and more robust model selection. As such, the embodiments described herein provide many advantages over conventional techniques including, but not limited to, increased model performance, the online re-training and labeling infrastructure respecting end user data privacy and residency, shortened time for the machine learning model re-training process, modular and flexible model choice (e.g., with humans in the loop), and lower machine learning knowledge requirement on end users to operate the machine learning model re-training process.

While embodiments have been described herein, those skilled in the art, having benefit of this disclosure, will appreciate that other embodiments are envisioned that do not depart from the inventive scope. Accordingly, the scope of the present claims or any subsequent claims shall not be unduly limited by the description of the embodiments described herein.

The techniques presented and claimed herein are referenced and applied to material objects and concrete examples of a practical nature that demonstrably improve the present technical field and, as such, are not abstract, intangible or purely theoretical. Further, if any claims appended to the end of this specification contain one or more elements designated as "means for [perform]ing [a function]..." or "step for [perform]ing [a function]...", it is intended that such elements are to be interpreted under 35 U.S.C. § 112(f). However, for any claims containing elements designated in any other manner, it is intended that such elements are not to be interpreted under 35 U.S.C. § 112(f).

## Claims

1. A method, comprising:
training a machine learning (ML) model to create a trained ML model, wherein the trained ML model is configured to output well prediction results based on datasets specific to respective wells;
providing a data label module to a computing system associated with an end user;
deploying the trained ML model to a cloud-based application;
receiving, via the cloud-based application, a training dataset specific to a well, wherein the training dataset comprises data labeling generated by the end user via the data label module;
re-training, via the cloud-based application, the trained ML model using the training dataset to generate a plurality of re-trained ML model candidates;
automatically evaluating, via the cloud-based application, the plurality of re-trained ML model candidates to generate a recommended re-trained ML model; and
outputting, from the cloud-based application, well prediction results and the recommended re-trained ML model to the computing system associated with the end user.

2. The method of claim 1, comprising:
encrypting, via the data label module, the training dataset prior to sending the training dataset to the cloud-based application; and
decrypting, via a new data labeling module of the cloud-based application, the training dataset during re-training of the trained ML model without exposing the training dataset external to the new data labeling module and the trained ML model.

3. The method of claim 1, comprising validating, via the cloud-based application, the trained ML model by determining whether the well prediction results are within predetermined accuracy thresholds.

4. The method of claim 1, comprising automatically evaluating, via the cloud-based application, the plurality of re-trained ML model candidates to generate the recommended re-trained ML model based on a results confidence index, a robustness to noise index, and a matching index between the well prediction results and related observation data.

5. The method of claim 4, comprising automatically evaluating, via the cloud-based application, the plurality of re-trained ML model candidates to generate the recommended re-trained ML model using a spider diagram analysis.

6. The method of claim 1, comprising outputting, from the cloud-based application, a command signal to the computing system to automatically launch a well evaluation module on the computing system to present data relating to the well prediction results and the recommended re-trained ML model.

7. The method of claim 1, wherein the well prediction results comprise well integrity prediction results.

8. A cloud-based infrastructure, comprising:
a logging and control system configured to:
train a machine learning (ML) model to create a trained ML model, wherein the trained ML model is configured to output well prediction results based on datasets specific to respective wells;
provide a data label module to a computing system associated with an end user;
deploy the trained ML model to a cloud-based application, wherein the cloud-based application is configured to:
receive a training dataset specific to a well, wherein the training dataset comprises data labeling generated by the end user via the data label module;
re-train the trained ML model using the training dataset to generate a plurality of re-trained ML model candidates;
automatically evaluate the plurality of re-trained ML model candidates to generate a recommended re-trained ML model; and
output well prediction results and the recommended re-trained ML model to the computing system associated with the end user.

9. The cloud-based infrastructure of claim 8, wherein the logging and control system is configured to encrypt, via the data label module, the training dataset prior to sending the training dataset to the cloud-based application; and wherein the cloud-based application is configured to decrypt the training dataset using a new data labeling module during re-training of the trained ML model without exposing the training dataset external to the new data labeling module and the trained ML model.

10. The cloud-based infrastructure of claim 8, wherein the cloud-based application is configured to validate the trained ML model by determining whether the well prediction results are within predetermined accuracy thresholds.

11. The cloud-based infrastructure of claim 10, wherein the cloud-based application is configured to automatically evaluate the plurality of re-trained ML model candidates to generate the recommended re-trained ML model based on a results confidence index, a robustness to noise index, and a matching index between the well prediction results and related observation data.

12. The cloud-based infrastructure of claim 8, wherein the cloud-based application is configured to automatically evaluate the plurality of re-trained ML model candidates to generate the recommended re-trained ML model using a spider diagram analysis.

13. The cloud-based infrastructure of claim 8, wherein the cloud-based application is configured to output a command signal to the computing system to automatically launch a well evaluation module on the computing system to present data relating to the well prediction results and the recommended re-trained ML model.

14. The cloud-based infrastructure of claim 8, wherein the well prediction results comprise well integrity prediction results.

15. A method, comprising:
training a machine learning (ML) model to create a trained ML model, wherein the trained ML model is configured to output well prediction results based on datasets specific to respective wells;
encrypting, via a data label module, a training dataset;
providing the data label module to a computing system associated with an end user;
deploying the trained ML model to a cloud-based application;
receiving, via the cloud-based application, a training dataset specific to a well, wherein the training dataset comprises data labeling generated by the end user via the data label module;
re-training, via the cloud-based application, the trained ML model using the training dataset to generate a plurality of re-trained ML model candidates;
decrypting, via a new data labeling module of the cloud-based application, the training dataset during re-training of the trained ML model without exposing the training dataset external to the new data labeling module and the trained ML model;
automatically evaluating, via the cloud-based application, the plurality of re-trained ML model candidates to generate a recommended re-trained ML model; and
outputting, from the cloud-based application, well prediction results and the recommended re-trained ML model to the computing system associated with the end user.

16. The method of claim 15, comprising validating, via the cloud-based application, the trained ML model by determining whether the well predictions results are within predetermined accuracy thresholds.

17. The method of claim 15, comprising automatically evaluating, via the cloud-based application, the plurality of re-trained ML model candidates to generate the recommended re-trained ML model based on a results confidence index, a robustness to noise index, and a matching index between the well prediction results and related observation data.

18. The method of claim 17, comprising automatically evaluating, via the cloud-based application, the plurality of re-trained ML model candidates to generate the recommended re-trained ML model using a spider diagram analysis.

19. The method of claim 15, comprising outputting, from the cloud-based application, a command signal to the computing system to automatically launch a well evaluation module on the computing system to present data relating to the well prediction results and the recommended re-trained ML model.

20. The method of claim 15, wherein the well prediction results comprise well integrity prediction results.
